# EUROPEAN PATENT APPLICATION

(11) **EP 4 148 582 A1**
(43) Date of publication of application: **15.03.2023**
(21) Application number: 21212546.2
(22) Date of filing: 06.12.2021
(51) Int. Cl.: G06F 11/34

(54) **VIRTUAL FUNCTION PERFORMANCE ANALYSIS SYSTEM AND ANALYSIS METHOD THEREOF**

(30) Priority: 08.09.2021 TW 110133368
(71) Applicant: Industrial Technology Research Institute, Chutung, Hsinchu 310401 (TW)
(72) Inventor: LEE, Yu-Wei, 510 Changhua County (TW); HSU, Ming-Hung, 310 Hsinchu County (TW); YEN, Chih-Kuan, 310 Hsinchu County (TW)
(74) Representative: dompatent von Kreisler Selting Werner - Partnerschaft von Patent- und Rechtsanwälten mbB

(57) **Abstract**

A virtual function performance analysis system and an analysis method thereof are disclosed. The virtual function performance analysis method includes: monitoring performance of at least one virtual function of a virtual network function application on a virtual platform having at least one physical resource and at least one virtual resource; monitoring and recording an actual value of each of performance indicators of each of physical resources, each of virtual resources and each of virtual functions; comparing the actual value of each of performance indicators with the associated expected value and/or threshold value to obtain a comparison result; and analyzing system performance according to the comparison result.

## Description

### TECHNICAL FIELD

The present disclosure relates in general to a virtual function performance analysis system and an analysis method thereof, and relates to an analysis system for execution performance of virtual function in a virtual platform infrastructure and an analysis method thereof.

### BACKGROUND

Along with the evolution of network communication infrastructure and software technology, each physical computing resource or each storage resource may be virtually operated on a virtual platform infrastructure. On the virtualized infrastructure, a terminal application of a user (i.e., a virtual network function application) may flexibly access the virtual computing resources or storage resources in the virtual platform infrastructure.

However, the execution of the virtual network function application and the access of the virtual resources in an environment of virtual platform are far more complicated than that in a physical environment. Moreover, the virtual network function application may be a free of charge open-source software or a package provided by a third party. If the virtual network function application has abnormalities, overall system performance on the virtual platform will deteriorate. However, it is very difficult for the user to identify which functional component (e.g., virtual function) of the virtual network function application has abnormalities.

Therefore, research and development personnel in relevant industries of the present technology field are engaged in analyzing performance of internal functional components (i.e., virtual functions as programmatic function calls) of the virtual network function application with an aim to more accurately analyze what factors deteriorate system performance on the virtual platform and to identify the bottleneck of system performance on the virtual platform.

### SUMMARY

According to one embodiment of the present disclosure, a virtual function performance analysis system is disclosed. The virtual function performance analysis system, characterized in that, the system includes a monitoring unit, a performance analysis unit and a resource adjusting unit. The monitoring unit is configured to monitor performance of at least one virtual function of a virtual network function application on a virtual platform, wherein the virtual platform has at least one physical resource and at least one virtual resource, each physical resource, each virtual resource and each virtual function is evaluated with at least one performance indicator respectively; each of the performance indicators is associated with an expected value and/or a threshold value for each target virtual resource or virtual function; the monitoring unit monitors and records an actual value of each of the performance indicators on the virtual platform. The performance analysis unit is configured to compare the actual value of each of the performance indicators with the associated expected value and/or threshold value to obtain a comparison result of each of the performance indicators and to analyze system performance according to the comparison result.

According to another embodiment of the present disclosure, a virtual function performance analysis method is disclosed. The virtual function performance analysis method, characterized in that, the method includes: monitoring performance of at least one virtual function of a virtual network function application on a virtual platform, wherein the virtual platform has at least one physical resource and at least one virtual resource, each physical resource, each virtual resource and each virtual function is evaluated with at least one performance indicator respectively; each of the performance indicators is associated with an expected value and/or a threshold value respectively. Monitoring and recording an actual value of each performance indicator on the virtual platform. Comparing the actual value of each performance indicator with the associated expected value and/or threshold value to obtain a comparison result of each of the performance indicators and analyzing system performance according to the comparison result.

The above and other aspects of the invention will become better understood with regard to the following detailed description of the preferred but non-limiting embodiment (s). The following description is made with reference to the accompanying drawings.

### BRIEF DESCRIPTION OF THE DRAWINGS

FIG. 1A is a block diagram of an embodiment of virtual function performance analysis system of the present disclosure.
FIG. 1B is a block diagram of another embodiment of virtual function performance analysis system of the present disclosure.
FIG. 2 is a schematic diagram of an embodiment of performance indicator of virtual function of the present disclosure.
FIG. 3A is a schematic diagram of an operation embodiment of the testing unit of the present disclosure.
FIG. 3B is a schematic diagram of an embodiment of performance indicator of virtual function of the present disclosure.
FIG. 4A is a schematic diagram of an embodiment of physical resources and virtual resources of a virtual platform of the present disclosure.
FIG. 4B is a schematic diagram of an embodiment of allocation of virtual resources of a virtual platform of the present disclosure
FIG. 5 is a schematic diagram of an operation embodiment of the monitoring unit of the present disclosure.
FIGS. 6A-6C are flowcharts of an embodiment of virtual function performance analysis method of the present disclosure.
FIG. 7 is a flowchart of another embodiment of virtual function performance analysis method of the present disclosure.
FIG. 8 is a flowchart of still another embodiment of virtual function performance analysis method of the present disclosure.
FIG. 9 is a flowchart of yet another embodiment of virtual function performance analysis method of the present disclosure.

### DETAILED DESCRIPTION

Technical terms are used in the specification with reference to generally-known terminologies used in the technology field. For any terms described or defined in the specification, the descriptions and definitions in the specification shall prevail. Each embodiment of the present disclosure has one or more technical features. Given that each embodiment is implementable, a person ordinarily skilled in the art may selectively implement or combine some or all of the technical features of any embodiment of the present disclosure.

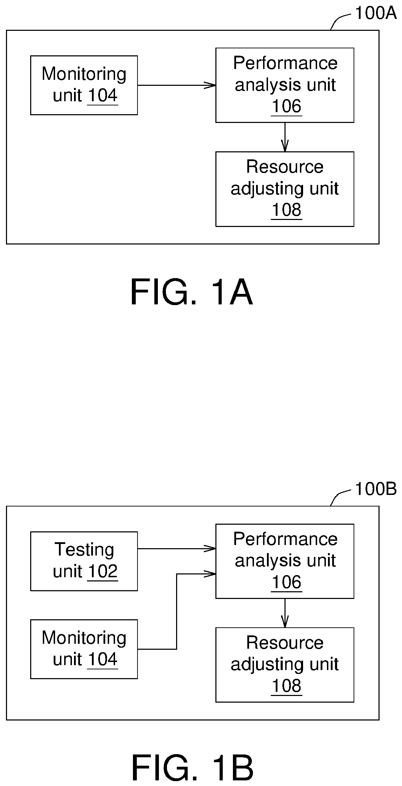

FIG. 1A is a block diagram of an embodiment of virtual function performance analysis system 100A of the present disclosure. Refer to FIG. 1A. The virtual function performance analysis system 100A includes a monitoring unit 104, a performance analysis unit 106, and a resource adjusting unit 108. The virtual function performance analysis system 100A analyzes and monitors performance of the virtual network function (VNF) application and each virtual function executed in a network function virtualization infrastructure (NFVI).

On the virtual platform of an actual environment where the virtual network function application is executed, the monitoring unit 104 may monitor performance of at least one virtual function of the virtual network function application. More specifically, the virtual network function application and each virtual function respectively are evaluated with one or more than one performance indicator; each performance indicator may reflect performance of the virtual network function application and each virtual function executed on the virtual platform. For a target virtual function, each performance indicator is associated with an expected value, which may be system default or user defined. Besides, long-term status of each virtual function operated on the virtual platform may be observed and analyzed through machine learning to create an expected value associated with each performance indicator. Moreover, an usage status of each physical resource and/or each virtual resource used by the virtual network function application on the virtual platform may also serve as a performance indicator of the virtual function performance analysis system 100A.

The monitoring unit 104 monitors the execution of each virtual function and accordingly records actual performance of each virtual function on the virtual platform to obtain an actual value of each performance indicator with which each virtual function is evaluated. Moreover, the monitoring unit 104 also monitors the status of each virtual resource and/or each physical resource used by each virtual network function application on the virtual platform and accordingly records the actual value of each performance indicator with which each virtual resource and/or each physical resource is evaluated.

The performance analysis unit 106 analyzes and compares the actual value of each performance indicator of each virtual resource and/or each physical resource and each virtual function with associated expected values, analyzes and compares the status of each virtual resource and/or each physical resource used by each virtual network function application to obtain a comparison result, and analyzes system performance according to the comparison result, so as to determine whether the virtual network function application and each virtual function have abnormalities which deteriorate overall system performance on the virtual platform. The performance analysis unit 106 further precisely locates particular virtual function, virtual resource or physical resource, which deteriorates performance, and identifies possible abnormalities leading to bottleneck of system performance.

Based on the identified abnormalities, the resource adjusting unit 108 may perform system resource adjustment according to the execution status of the virtual network function application or each virtual function, for example, by expanding service of the virtual network function application to reduce the workload of the virtual function that causes performance bottleneck. Or, the resource adjusting unit 108 may adjust the allocation of physical resources and/or virtual resources on the virtual platform, for example, by expanding the allocation of physical resources and/or virtual resources to assure that sufficient physical resources and/or virtual resources may be allocated to the virtual network function application which has the virtual function as a bottleneck.

FIG. 1B is a block diagram of another embodiment of virtual function performance analysis system 100B of the present disclosure. Refer to FIG. 1B. In comparison to the virtual function performance analysis system 100A of FIG. 1A, the virtual function performance analysis system 100B of the present embodiment further includes a testing unit 102. The testing unit 102 may test each virtual function of the virtual network function application on the testing platform to evaluate the expected performance of each virtual function (that is, if the physical resources and/or virtual resources are sufficient, the normal performance of each virtual function will meet the expectation) and create the expected value associated with each performance indicator of each virtual function according to the expected performance.

In other words, unlike the expected value associated with each performance indicator in the virtual function performance analysis system 100A which may be system default or user defined, the expected value associated with each performance indicator in the virtual function performance analysis system 100B is created by the testing unit 102 on the testing platforming or through machine learning beforehand.

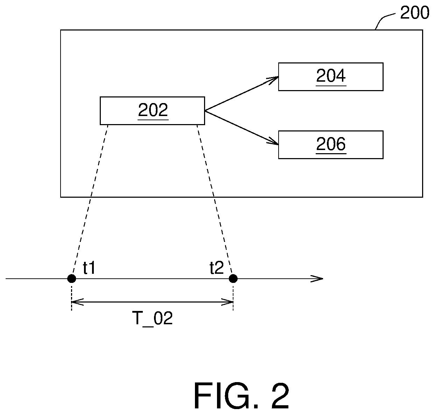

Descriptions of the virtual function performance analysis system 100A or 100B of the present disclosure are disclosed above with accompanying drawings FIGS. 1A and 1B. Detailed descriptions of each unit of the virtual function performance analysis system 100A or 100B are disclosed below with accompanying drawings FIGS. 2, 3A, 3B, 4 and 5.

FIG. 2 is a schematic diagram of an embodiment of performance indicator of virtual function of the present disclosure. Refer to FIG. 2. The virtual network function application 200 is the main target monitored and analyzed by the virtual function performance analysis system 100A (or 100B). The virtual network function application 200 may be referred as a "target virtual network function application". The virtual network function application 200 may be a process or a virtual machine executed on a virtual platform. The virtual network function application 200 may include several virtual functions. For example, the virtual network function application 200 at least includes a virtual function 202, a virtual function 204, and a virtual function 206. Each of each virtual function 202, 204, and 206 may be evaluated with one or more than one performance indicator. The performance indicators may reflect performance of each of the virtual functions 202, 204 and 206 in various execution aspects on the virtual platform. The performance indicators of each of the virtual functions 202, 204 and 206 include but are not limited to the "execution time", "execution frequency", "error rate" and "queue length" of each of the virtual functions 202, 204 and 206.

Firstly, let the performance indicator "execution time" of each of the virtual functions 202, 204 and 206 be taken for example. The execution time directly reflects the performance of each of the virtual functions 202, 204 and 206. If the execution time is too long, this indicates that one of the following scenarios may occur: the execution of each of the virtual functions 202, 204 and 206 is blocked; the workload of each of the virtual functions 202, 204 and 206 is overloaded; the physical resources are competed on the virtual platform; or the physical resources and/or virtual resources allocated to the virtual network function application 200 (which has the virtual functions 202, 204 and 206) are insufficient.

More specifically, taking the virtual function 202 as an example, the execution time T_02 of the virtual function 202 is the time interval between the starting time point t1 and the end time point t2 of the execution of the virtual function 202. The starting time point t1 may be the time point when the virtual function 202 is called; the end time point t2 may be the time point when the virtual function 202 returns the result. In another implementation, if the virtual function 202 may be executed in a multi-thread environment, then the execution time T_02 of the virtual function 202 is the respective execution time of the virtual function 202 corresponding to each thread of multi-thread.

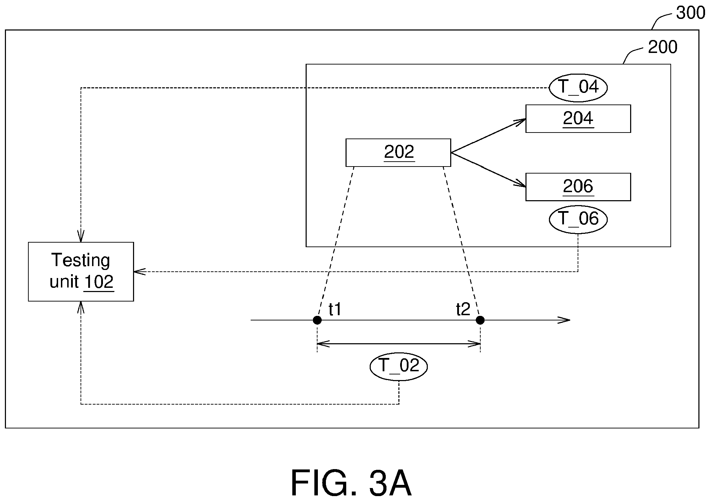

As disclosed above, in the virtual function performance analysis system 100B of FIG. 1B, the expected value associated with each performance indicator of the virtual function may be created by the testing unit 102 beforehand. FIG. 3A is a schematic diagram of an operation embodiment of the testing unit 102 of the present disclosure. Refer to FIG. 3A. The testing unit 102 may test the virtual functions 202, 204 and 206 of the virtual network function application 200 on the testing platform 300 beforehand. The testing platform 300 is a platform with a clean room, such as a laboratory. The clean room of the testing platform 300 is a simplified environment in which the environmental variables or external factors that may affect the execution of each of the virtual functions 202, 204 and 206 is minimized. Therefore, performance of each of the virtual functions 202, 204 and 206 on the testing platform 300 basically may meet users' expectation. On the testing platform 300, the value of each performance indicator of each of the virtual functions 202, 204 and 206 collected by the testing unit 102 may be used as an expected value associated with each performance indicator (or may be referred as "baseline"). For example, the collected values of the execution time T_02, T_04 and T_06 of each of the virtual functions 202, 204 and 206 on the testing platform 300 may be used as expected values of the execution time of each of the virtual functions 202, 204 and 206 respectively.

More specifically, let the execution time T_02 of the virtual function 202 be taken for example. The testing unit 102 may observe the execution time T_02 using eBPF. Or, in another implementation, when the user programs the programming code of the virtual function 202, observation points may be created in the programming code of the virtual function 202 to record the time points (starting time point t1 and end time point t2) at which the virtual function 202 is called and returns the result respectively, such that the execution time T_02 may be calculated according to the log of the observation points created in the programming code.

Under different environmental scenarios, the execution time T_02, T_04 and T_06 of each of the virtual functions 202, 204 and 206 may vary. Therefore, the testing unit 102 may collect the statistics of the execution time T_02, T_04 and T_06 of each of the virtual functions 202, 204 and 206 under different environmental scenarios to obtain the minimum value, mean value and maximum value of the execution time T_02, T_04, T06. For example, as listed in Table 1, on the testing platform 300, the expected values of the execution time T_02, T_04 and T_06 of each of the virtual functions 202, 204 and 206 built by the testing unit 102 are as follows. For the expected value of the execution time T_02 of the virtual function 202 , the minimum is 50us, the mean is 100us, and the maximum is 200us. For the expected value of the execution time T_04 of the virtual function 204, the minimum is 30us, the mean is 50us, and the maximum is 150us. Moreover, For the expected value of the execution time T_06 of the virtual function 206, the minimum is 100us, the mean is 130us, and the maximum is 250us.

| Table 1: Expected value or threshold value associated with performance indicators with which virtual functions are evaluated | | | | |
|---|---|---|---|---|
| | Expected value associated with performance indicator "execution time" | | Threshold value associated with performance indicator "queue length" | |
| Virtual function 202 | Execution time T_02 | Minimum 50us | Queue 202a | queue length: 200 |
| | | Mean 100us | | |
| | | Maximum 200us | | |
| Virtual function 204 | Execution time T_04 | Minimum 30us | Queue 204a | queue length: 200 |
| | | Mean 50us | | |
| | | Maximum 150us | | |
| Virtual function 206 | Execution time T_06 | Minimum 100us | N/A | |
| | | Mean 130us | | |
| | | Maximum 250us | | |

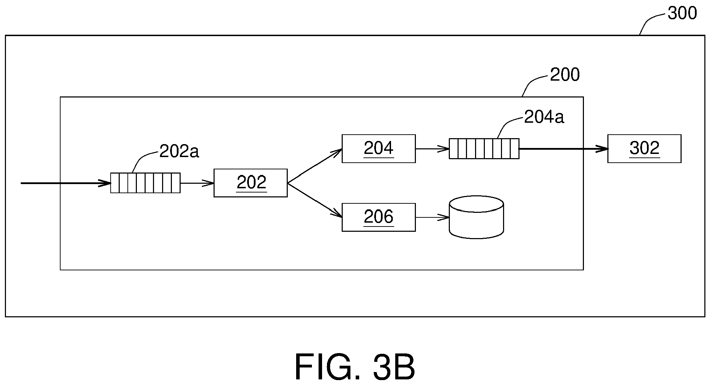

On the other hand, refer to FIG. 3B. The programming logic of each of the virtual functions 202, 204 and 206 may have queue. For example, the input end (input mechanism) of the virtual function 202 may have queue 202a; and the output end (output mechanism) of the virtual function 204 also may have queue 204a. The "queue length" of the queues 202a and 204a of each virtual function 202 and 204 is another important performance indicator.

The virtual function performance analysis system 100A (or 100B) may set a threshold value for the queue length of the queue 202a and queue 204a respectively, wherein the threshold value may be system defaulted or user defined. For example, the user (virtual function developer) may collect statistics and evaluate a reasonable queue length for the queue 202a and the queue 204 respectively according to the historical data of use, and set the reasonable queue length as a threshold value associated with the performance indicator "queue length". As listed in Table 1, the threshold value of the queue length of the queue 202a at the input end of the virtual function 202 may be set to 200. When the virtual function 202 is executed, if the queue length of the queue 202a is over the threshold value, this indicates the virtual function 202 has abnormalities. On the other hand, for the queue 204a at the output end of the virtual function 204, if the queue length of the queue 204a is too long, this indicates that the other virtual function 302 using the queue 204a as the input end possibly may have abnormalities.

Moreover, each of the virtual functions 202, 204 and 206 may be evaluated with other performance indicators, such as "execution frequency" and "error rate", wherein the "execution frequency" of each of the virtual functions 202, 204 and 206 is the number of times for which each of the virtual functions 202, 204 and 206 is executed within a unit time (i.e., number of executions being performed per unit time). Besides, if each of the virtual functions 202, 204 and 206 is executed in a multi-thread environment, the performance indicators "queue length", "execution frequency" and "error rate" respectively are the queue length, execution frequency and error rate of each of the virtual functions 202, 204 and 206 corresponding to each thread of multi-thread.

The expected value or threshold value associated with each performance indicator of each of the virtual functions 202, 204 and 206 may be estimated by the testing unit 102 on the testing platform 300 through test or evaluation, may be user defined, may be system default, or may be created. For example, the actual value of each performance indicator of each of the virtual functions 202, 204 and 206 may be recorded over a long period of operation time, and the expected value or threshold value associated with each performance indicator may be obtained by statistical analysis through machine learning.

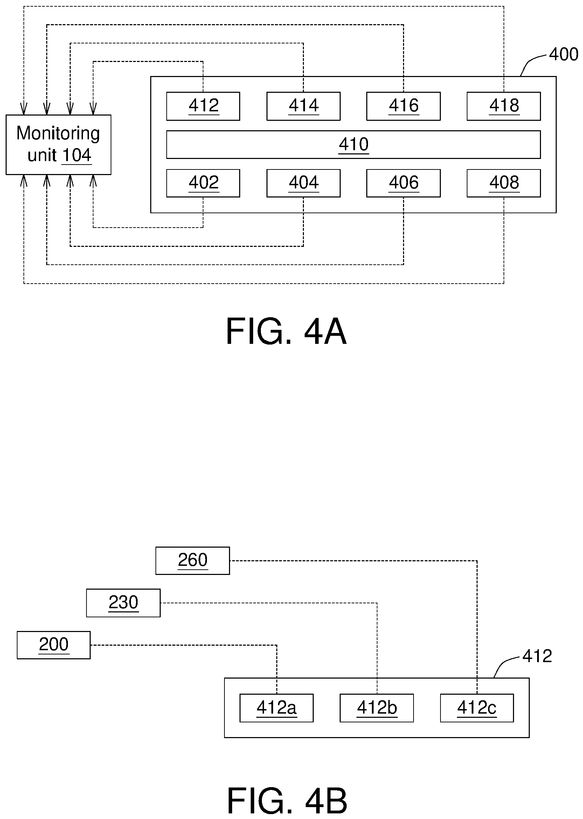

Except for the performance indicators "execution time", "queue length", "execution frequency" and "error rate", the "usage status" of physical resources and virtual resources of virtual platform used by the virtual network function application 200 (which has the virtual functions 202, 204 and 206) also reflects performance of the virtual network function application 200. Therefore, the "usage status" of the physical resources and/or virtual resources used by the virtual network function application 200 is a performance indicator which the virtual function performance analysis system 100A (or 100B) would like to analyze. FIG. 4A is a schematic diagram of an embodiment of physical resources and virtual resources of a virtual platform 400 of the present disclosure. Refer to FIG. 4A. The virtual platform 400 is an actual field in which the virtual network function application 200 is executed. Physical resources on the virtual platform 400 at least include a physical central processing unit (CPU) 402, a physical memory 404, a physical network bandwidth 406, and a physical disc input/output (disk I/O) 408.

On the other hand, on a virtual platform 400, the physical resources may be virtualized as corresponding virtual resources on a virtual layer 410. The physical CPU 402, the physical memory 404, the physical network bandwidth 406, and the physical disc input/output 408 respectively correspond to a virtual CPU 412, a virtual memory 414, a virtual network bandwidth 416, and a virtual disc input/output 418. Moreover, the virtual platform 400 may allocate the virtual resources to the virtual network function application 200 and other virtual network function applications. Also referring to FIG. 4B, which illustrates a schematic diagram of an embodiment of allocation of virtual resources of a virtual platform 400 of the present disclosure. Taking the virtual CPU 412 of the virtual resource for example, the virtual CPU 412 at least includes a virtual resource 412a, a virtual resource 412b and a virtual resource 412c, wherein the virtual resource 412a is allocated to the virtual network function application 200; the virtual resource 412b is allocated to the virtual network function application 230; and the virtual resource 412c is allocated to the virtual network function application 260.

Referring to Table 2, several performance indicators of the "usage status" of each physical resource and/or each virtual resource on the virtual platform 400 are listed. In a broad sense, the performance indicator with which each physical resource and/or each virtual resource is evaluated may comprise the "usage status" of each physical resource and/or each virtual resource. More particularly, the performance indicator type related to the "usage status" of each physical resource and/or each virtual resource may include "value of usage status", "error event" and "resource saturation" of each physical resource and/or each virtual resource. Let the type of performance indicator be "value of usage status". Details of the performance indicator "value of usage status" of each physical resource and/or each virtual resource may include value of usage status of single CPU, memory and disc respectively and average value of usage status of the overall system, and transmitted/received data flow and bandwidth of a network interface.

| Table 2: Performance indicators with which the physical resources and virtual resources of virtual platform 400 are evaluated | | |
|---|---|---|
| physical resources and virtual resources | Type of performance indicators | Details of performance indicators |
| CPU | value of usage status | value of usage status of single CPU, average value of usage status of overall system |
| | Error event | Correctable error correction code (ECC) event in cache, error event in CPU |
| | Resource saturation | Queue length, waiting time of scheduler |
| Memory | value of usage status | available memory |
| | Resource saturation | Unknown page transfer, unknown thread exchange |
| Network bandwidth | value of usage status | Transmitted/received data flow and maximum bandwidth |
| | Resource saturation | Saturated network interface or operating system |
| Disc input/output | value of usage status | Percentage of busy in device |
| | Resource saturation | Queue length |
| | Error event | error in device |

Based on the performance indicators listed in Table 2, the virtual function performance analysis system 100A (or 100B) may create the expected value and/or threshold value associated with each performance indicator according to system default value or user defined value. Refer to Table 2-1. The virtual network function application 200 may set the expected value of the "value of usage status" of the virtual resource 412a of the virtual CPU 412 to 22%; the virtual network function application 230 may set the expected value of the "value of usage status" of the virtual resource 412b of the virtual CPU 412 to 25%; the virtual network function application 260 may set the expected value of the "value of usage status" of the virtual resource 412c of the virtual CPU 412 to 15%. Moreover, the virtual network function applications 200, 230 and 260 may set the expected value of the total value of usage status of the physical CPU 402 to 62%.

| Table 2-1: Expected value of "value of usage status" of the virtual resources and the physical resources of virtual platform 400 used by virtual network function applications 200, 230 and 260 | | |
|---|---|---|
| | Expected value associated with performance indicator "value of usage status" of virtual CPU 412 | Expected value associated with performance indicator "value of usage status" (total usage) of physical CPU 402 |
| Virtual network function application 200 | 22% | 62% |
| Virtual network function application 230 | 25% | |
| Virtual network function application 260 | 15% | |

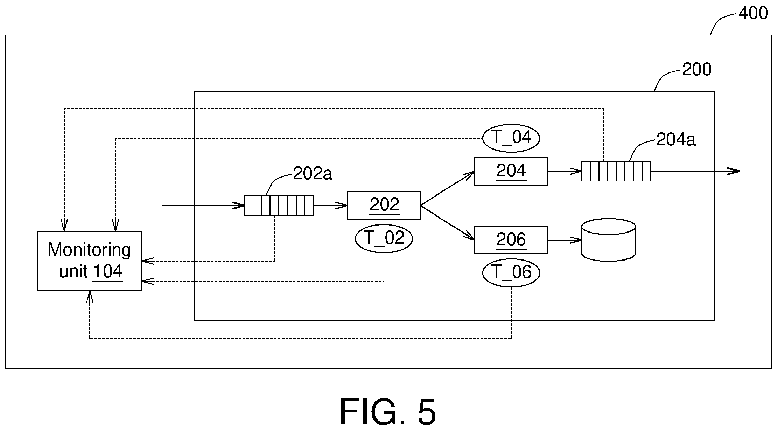

FIG. 5 is a schematic diagram of an operation embodiment of the monitoring unit 104 of the present disclosure. Refer to FIG. 5. When the virtual functions 202, 204 and 206 of the virtual network function application 200 are actually executed on a virtual platform 400, the monitoring unit 10 monitors and collects actual value of each performance indicator of each of the virtual functions 202, 204 and 206. Let the performance indicator "execution time" be taken for example. Actual values of the execution time T_02, execution time T_04 and execution time T_06 of the virtual functions 202, 204 and 206 are listed in Table 3. For the actual value of the execution time T_02 of the virtual function 202, the minimum is 55us, the mean is 103us, and the maximum is 205us. For the actual value of the execution time T_04 of the virtual function 204, the minimum is 27us, the mean is 49us, and the maximum is 130us. For the actual value of the execution time T_06 of the virtual function 206, the minimum is 110us, the mean is 135us, and the maximum is 270us. On the other hand, let the performance indicator "queue length" be taken for example. The actual value of the queue length of the queue 202a of the virtual function 202 monitored by monitoring unit 104 is 250; the actual value of the queue length of queue 204a of the virtual function 204 is 250.

| Table 3: Actual values of performance indicators of virtual functions | | | | |
|---|---|---|---|---|
| | Actual value of performance indicator "execution time" | | Actual value of performance indicator "queue length" | |
| Virtual function 202 | Execution time T_02 | Minimum 55us | Queue 202a | queue length: 250 |
| | | Mean 103us | | |
| | | Maximum 205us | | |
| Virtual function 204 | Execution time T_04 | Minimum 27us | Queue 204a | queue length: 250 |
| | | Mean 49us | | |
| | | Maximum 130us | | |
| Virtual function 206 | Execution time T_06 | Minimum 110us | N/A | |
| | | Mean 135us | | |
| | | Maximum 270us | | |

As disclosed above, the monitoring unit 104 also monitors and records actual value of usage status of each virtual resource and/or each physical resource used by the virtual network function application 200 (that is, target virtual network function application) and other virtual network function applications 230 and 260 on the virtual platform 400 to obtain actual value of each performance indicator of each physical resource and/or each virtual resource. Let performance indicator "value of usage status" be taken for example. Actual values of the values of usage status of the virtual CPU 412 and/or physical CPU 402 of the virtual network function applications 200, 230 and 260 recorded by the monitoring unit 104 are listed in Table 4.

| Table 4: Actual value of "value of usage status" of the virtual resources and the physical resources of virtual platform 400 used by virtual network function applications 200, 230 and 260 | | |
|---|---|---|
| | Actual value of performance indicator "value of usage status" of virtual CPU 412 | Actual value of performance indicator "value of usage status" (total usage) of physical CPU 402 |
| Virtual network function application 200 | 20% | 60% |
| Virtual network function application 230 | 22% | |
| Virtual network function application 260 | 18% | |

As listed in Table 4, actual value of usage status of the virtual CPU 412 (virtual resource 412a) set on or allocated to the virtual network function application 200 is 20%; actual value of usage status of the virtual CPU 412 (virtual resource 412b) set on or allocated to the virtual network function application 230 is 22%; actual value of usage status of the virtual CPU 412 (virtual resource 412c) set on or allocated to the virtual network function application 260 is 18%. Besides, actual total value of usage status of the physical CPU 402 of the virtual network function applications 200, 230 and 260 is 60%.

To summarize, the monitoring unit 104 may monitor and record actual value of each performance indicator (such as "execution time", "queue length", "execution frequency", or "error rate") of each of the virtual functions 202, 204 and 206 of the virtual network function application 200 (target virtual network function application). Moreover, the monitoring unit 104 also may monitor and record the usage status of each physical resource and/or each virtual resource used by the virtual network function application 200 and other virtual network function applications 230 and 260 on the virtual platform 400 to record actual value of each performance indicator (such as "value of usage status", "error event", or "resource saturation") of each physical resource and/or each virtual resource.

Thus, the performance analysis unit 106 may compare actual value of each performance indicator of each of the virtual functions 202, 204 and 206 of the virtual network function application 200 and actual value of each performance indicator of each physical resource and/or each virtual resource on the virtual platform 400 with associated expected value and/or threshold value to determine whether the virtual functions 202, 204 and 206 of the virtual network function application 200 have abnormalities or whether the usage status of each physical resource/each virtual resource is abnormal, so as to analyze performance bottleneck which causes abnormalities. Then, the resource adjusting unit 108 may adjust service of the virtual network function application 200 or the virtual functions 202, 204 and 206, adjust the virtual resources allocated to the virtual network function application 200 and/or other virtual network function applications 230 and 260, or expand the physical resources on the virtual platform 400. Detailed operations of the performance analysis unit 106 and the resource adjusting unit 108 are disclosed below with embodiments of the virtual function performance analysis method.

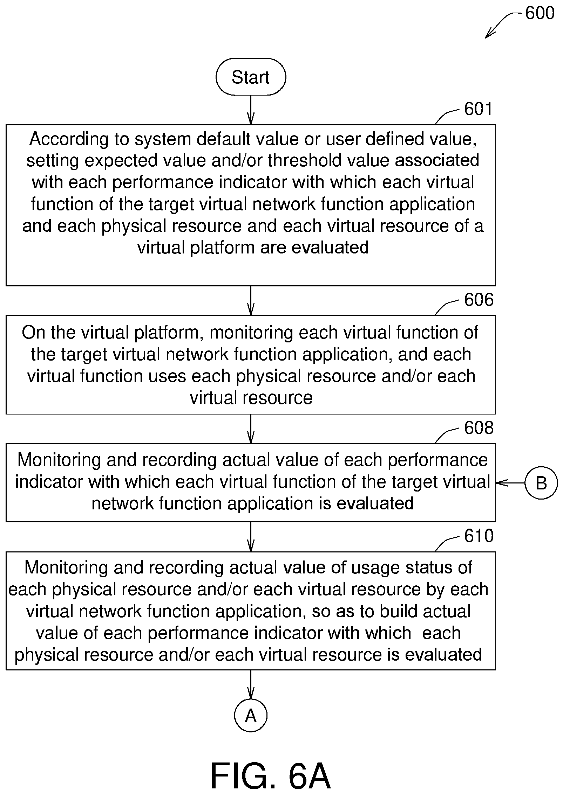

FIGS. 6A-6C are flowcharts of an embodiment of virtual function performance analysis method 600 of the present disclosure. Refer to FIG. 6A. Firstly, the method begins at step 601, according to system default value or user defined value, setting expected value and/or threshold value associated with each performance indicator of the virtual functions 202, 204 and 206 of the main target to be monitored and analyzed, that is, the virtual network function application 200 (i.e., target virtual network function application), and setting expected value and/or threshold value associated with each performance indicator of each physical resource (physical CPU 402, physical memory 404, physical network bandwidth 406, and physical disc input/output 408) and each virtual resource (virtual CPU 412, virtual memory 414, virtual network bandwidth 416, and virtual disc input/output 418) of a virtual platform 400. Examples of performance indicators of the virtual functions 202, 204 and 206 include: "execution time", "queue length", "execution frequency" and "error rate". Examples of performance indicators of each physical resource and each virtual resource of the virtual platform 400 include "value of usage status", "error event", and "resource saturation".

Then, the method proceeds to step 606, the virtual functions 202, 204 and 206 of the virtual network function application 200 are monitored in an actual environment on the virtual platform 400, wherein the virtual network function application 200 uses each virtual resource and each physical resource on the virtual platform 400.

Then, the method proceeds to step 608, actual value of each performance indicator of each of the virtual functions 202, 204 and 206 is monitored and recorded by the monitoring unit 104 of the virtual function performance analysis system 100A (or 100B) on the virtual platform 400.

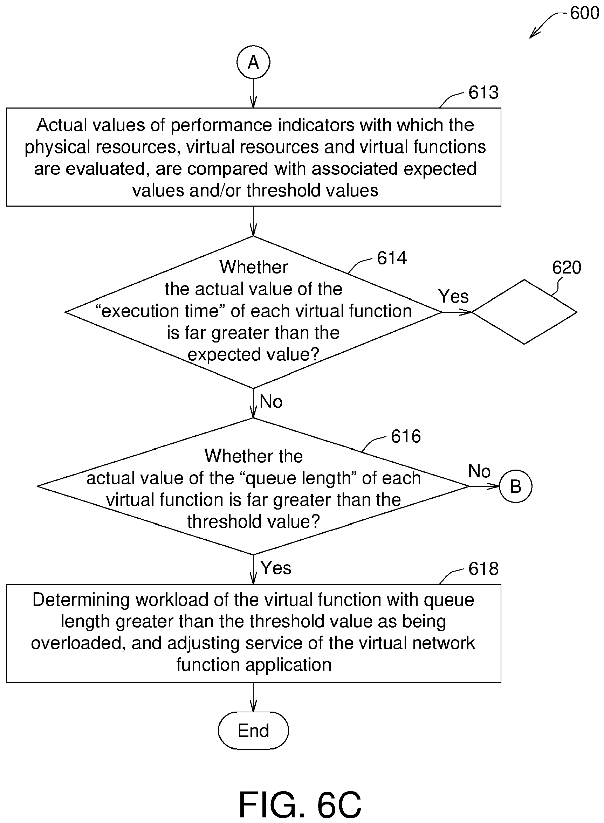

Then, the method proceeds to step 610, actual condition of use (such as "value of usage status") of each physical resource and each virtual resource by the virtual network function application 200 and other virtual network function applications 230 and 260 are monitored and recorded by the monitoring unit 104 on the virtual platform 400 to build actual value of each performance indicator of each physical resource and each virtual resource. Then, step 613 of FIG. 6C is performed.

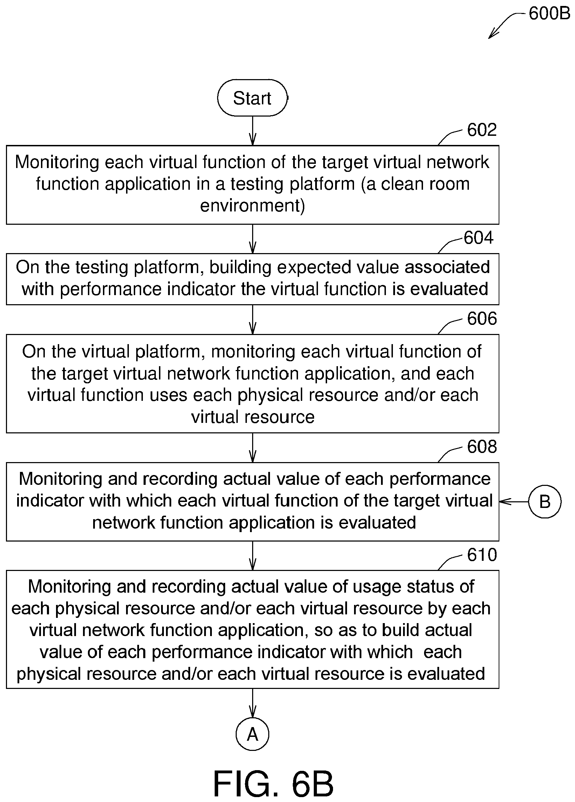

In the method 600 of FIG. 6A, expected value associated with each performance indicator of each physical resource and/or each virtual resource, and expected value and/or threshold value associated with each performance indicator of each of the virtual functions 202, 204 and 206 is predetermined according to system default value or user defined value. However, in the method 600B of FIG. 6B, the expected value associated with each performance indicator of each of the virtual functions 202, 204 and 206 may be created by the testing unit 102 on the testing platform 300 beforehand. As indicated in FIG. 6B, step 602 and step 604 may may perform prior to step 606. In step 602, the virtual functions 202, 204 and 206 of the target virtual network function application 200 are executed in a clean room of the testing platform 300. Then, the method proceeds to step 604, based on the execution result obtained from the execution of each of the virtual functions 202, 204 and 206 on the testing platform 300, the value of each performance indicator of each of the virtual functions 202, 204 and 206 is collected by the testing unit 102, and the expected value associated with each performance indicator is created according to the collected values. Details of step 606 to step 610 of method 600B of FIG. 6B are completely identical to that of the method 600 of FIG. 6A, and the similarities are not repeated here.

Refer to FIG. 6C. In step 613, an actual value of each performance indicator (such as "value of usage status") of each physical resource and/or each virtual resource and each performance indicator (such as "execution time", "queue length") of each of the virtual functions 202, 204 and 206 is compared with the associated expected value and/or threshold value by the performance analysis unit 106 of the virtual function performance analysis system 100A (or 100B) to obtain a comparison result, and determining whether the virtual functions 202, 204 and 206 have abnormalities according to the comparison result.

For example, in step 614, the comparison result between the actual value and the expected value and/or threshold value associated with performance indicator indicates that the actual value of the performance indicator "execution time" of each of the virtual functions 202, 204 and 206 basically meets the expected value, wherein the actual value is not far greater than the expected value. As listed in Table 3, the actual value (includes the minimum, the mean and the maximum) of the execution time of each of the virtual functions 202, 204 and 206 basically meets the expected value of the execution time as listed in Table 1, this indicates that the actual value of the execution time of each of the virtual functions 202, 204 and 206 on a virtual platform 400 basically meets the expected value. Therefore, it is determined that the workload of each of the virtual functions 202, 204 and 206 is not overloaded. Meanwhile, step 616 may be performed to analyze whether actual values of other performance indicators are over the expected value and/or threshold value.

In step 616, the actual value of another performance indicator "queue length" is compared with the threshold value by the performance analysis unit 106. The comparison result obtained in step 616 indicates that the actual value of "queue length" is far greater than the threshold value (as listed in Table 3, actual value of the queue length of the virtual function 202 is 250, which is far greater than the threshold value of the queue length listed in Table 1, that is, 200). Based on the comparison result, it may be confirmed that the virtual function 202 has abnormalities, and performance bottleneck on the virtual platform 400 may be defined as the virtual function 202 whose actual value of queue length is far greater than the threshold value.

Then, the method proceeds to step 618, the workload of the virtual function 202 whose queue length is greater than the threshold value is determined as being overloaded by the performance analysis unit 106, and the resource adjusting unit 108 may adopt the following solutions to resolve the abnormalities of the virtual function 202, for example, by adjusting service of the virtual network function application 200 or by adjusting the allocation of the physical resources and/or virtual resources on the virtual platform 400.

In the present embodiment, the resource adjusting unit 108 adjusts service of the virtual network function application 200 by expanding other virtual network function applications similar to the virtual network function application 200 to share the workload of the virtual function 202 of the virtual network function application 200.

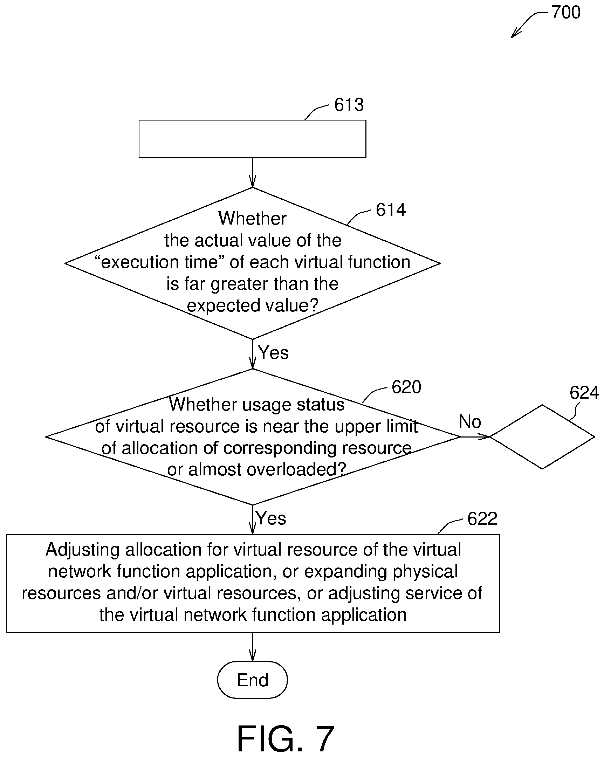

FIG. 7 is a flowchart of another embodiment of virtual function performance analysis method 700 of the present disclosure. The present embodiment of virtual function performance analysis method 700 succeeds to step 601 to step 613 of the afore-mentioned embodiment of virtual function performance analysis method 600, therefore step 601 to step 613 are omitted in FIG. 7.

Refer to FIG. 7. In step 614 of the present embodiment 700, based on the comparison result between the actual value of each performance indicator and the expected value and/or threshold value which shows that the actual value of the performance indicator "execution time" is far greater than the expected value (referring to Table 5: the mean and maximum of the actual values of execution time T_04 of the virtual function 204, that is, 238us and 2530us respectively, are far greater than the mean and maximum of the expected values of the execution time T_04, that is, 50us and 150us, as listed in Table 1), the performance analysis unit 106 determines that the virtual function 204 has abnormalities, and the virtual function 204 is located as the bottleneck which deteriorates system performance.

Possibly, the virtual function 204 becomes bottleneck due to the usage status of the physical resources and/or virtual resources being near an upper limit of the allocation of corresponding resources or almost overload. For example, the physical resources and/or virtual resources allocated to the virtual network function application 200 (which has the virtual function 204) are insufficient, making the usage status almost overloaded. Or, in a multi-thread environment, other virtual functions 202 or 206 of the virtual network function application 200 compete with the virtual function 204 for virtual resources. Or, other virtual network function applications 230 and 260 compete with the virtual network function application 200 (target virtual network function application) for physical resources. Meanwhile, step 620 may be performed to further clarify the causes.

| Table 5: Actual value of performance indicator of virtual functions | | | | |
|---|---|---|---|---|
| | Actual value of performance indicator "execution time" | | Actual value of performance indicator "queue length" | |
| Virtual function 202 | Execution time T_02 | Minimum 55us | Queue 202a | queue length: |
| | | Mean 103us | | |
| | | Maximum 205us | | 250 |
| Virtual function 204 | Execution time T_04 | Minimum 27us | Queue 204a | queue length: 250 |
| | | Mean 238us | | |
| | | Maximum 2530us | | |
| Virtual function 206 | Execution time T_06 | Minimum 110us | N/A | |
| | | Mean 135us | | |
| | | Maximum 270us | | |

In step 620, whether the usage status of each physical resource and/or each virtual resource is near an upper limit of the allocation of corresponding resources or almost overloaded is determined by the performance analysis unit 106 according to the recorded actual value of each performance indicator of each physical resource and/or each virtual resource. The analysis result is listed in Table 6. The actual value of usage status of the virtual CPU 412 used by the virtual network function application 200 (that is, target virtual network function application, which has the virtual function 204) is 54%, being far greater than the expected value as listed in Table 2-1, that is, 20%. This indicates that the usage status of the virtual CPU 412 used by the virtual network function application 200 is already near an upper limit of the allocation of the virtual resource 412a allocated to the virtual network function application 200, or the usage status is near the upper limit of the allocation or almost overloaded. Therefore, performance bottleneck of the virtual function 204 could possibly occur due to the following: resource (i.e., virtual resource 412a) of the virtual CPU 412, which is allocated by the virtual platform 400 to the virtual network function application 200 (which has the virtual function 204), is insufficient.

| Table 6: Actual value of "value of usage status" of the virtual resources and the physical resources of virtual platform 400 used by virtual network function applications 200, 230 and 260 | | |
|---|---|---|
| | Actual value of performance indicator "value of usage status" of virtual CPU 412 | Actual value of performance indicator "value of usage status" (total usage) of physical CPU 402 |
| Virtual network function application 200 | 54% | 89% |
| Virtual network function application 230 | 20% | |
| Virtual network function application 260 | 15% | |

Then, the method proceeds to step 622, the allocation of each virtual resource of the network function application 200 is adjusted by the resource adjusting unit 108. For example, the allocation of the virtual CPU 412 may be adjusted, that is, more virtual resource 412a of the virtual CPU 412 is allocated to the virtual network function application 200. Or, the resource adjusting unit 108 may expand the physical resources and/or virtual resources on the virtual platform 400. Or, the resource adjusting unit 108 may adjust service of the virtual network function application 200, for example, by expanding to execute other virtual network function applications with the same functions of the virtual network function application 200 to share the workload of the virtual network function application 200.

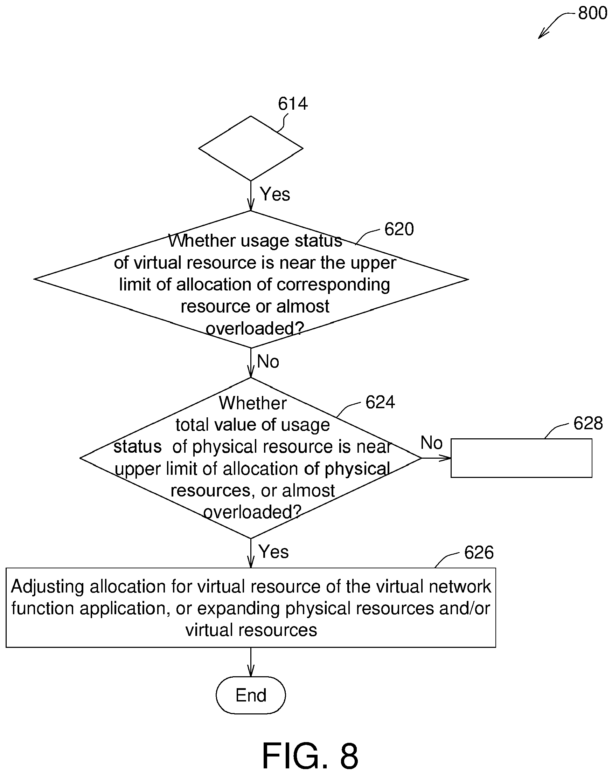

FIG. 8 is a flowchart of still another embodiment of virtual function performance analysis method 800 of the present disclosure. The present embodiment of virtual function performance analysis method 800 succeeds to step 601 to step 613 of the afore-mentioned embodiment of virtual function performance analysis method 600 and step 614 of the afore-mentioned embodiment of virtual function performance analysis method 700, therefore step 601 to step 614 are omitted in FIG. 8.

Refer to FIG. 8. In the step 620 of the present method 800, based on the analysis that the usage status of each virtual resource used by the virtual network function application 200 is within a normal range (as listed in Table 7, the actual value of usage status of the virtual CPU 412 used by the virtual network function application 200, that is, 25%, is only slightly greater than the expected value as listed in Table 2-1, that is, 22%, and is not far greater than the expected value, that is, 22%), the performance analysis unit 106 determines that the usage status of the virtual resource of the virtual network function application 200 is not near the upper limit of the allocation of the virtual resource, and the virtual resource of the virtual network function application 200 is not almost overloaded.

Next, step 624 is performed to further analyze whether the total value of usage status of the physical resources used by the virtual network function applications 200, 230 and 260 on the virtual platform 400 is near the upper limit of the allocation of the physical resources or almost overloaded.

| | | |
|---|---|---|
| Table 7: Actual value of the "value of usage status" of the virtual resources and the physical resources of virtual platform 400 used by virtual network function applications 200, 230 and 260 | | |

| | Actual value of performance indicator "value of usage status" of virtual CPU 412 | Actual value of performance indicator "value of usage status" (total usage) of physical CPU 402 |
|---|---|---|
| Virtual network function application 200 | 25% | 95% |
| Virtual network function application 230 | 52% | |
| Virtual network function application 260 | 18% | |

In step 624, the analysis result recorded by the performance analysis unit 106 as listed in Table 7 shows that the actual value of total value of usage status (i.e., total actual value of usage status ) of the physical CPU 402, that is, 95%, is near an upper limit of the allocation of the physical CPU 402 and almost overloaded, therefore it is determined that the virtual network function applications 230 and 260 other than the virtual network function application 200 are competing for the physical CPU 402, and the value of usage status of the physical CPU 402 used by the other virtual network function applications 230 and 260 is too high and results in overloading. As listed in Table 7, the value of usage status of the resource of the virtual CPU used by the virtual network function application 230 is 52% (52% is too high), this indicates the virtual network function application 230 is competing for the resource of the physical CPU 402.

Then, the method proceeds to step 626, the allocation of each virtual resource of the virtual network function application 200 is adjusted by the resource adjusting unit 108. For example, the allocation of the virtual CPU 412 may be adjusted, that is, more virtual resource 412a of the virtual CPU 412 is allocated to the virtual network function application 200, such that the virtual network function application 200 has sufficient virtual resource allocations. Or, the resource adjusting unit 108 may expand the physical resources and/or virtual resources on the virtual platform 400. Or, the resource adjusting unit 108 may adjust the physical CPU 402 whose usage status is near an upper limit of the allocation of the physical CPU 402 or almost overloaded, for example, by expanding the physical resources and/or virtual resources on the virtual platform 400, such that more physical CPU may be provided.

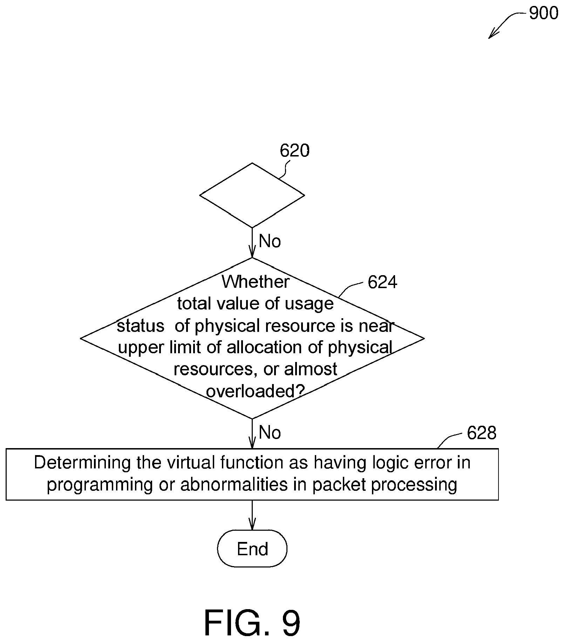

FIG. 9 is a flowchart of yet another embodiment of virtual function performance analysis method 900 of the present disclosure. The present embodiment of virtual function performance analysis method 900 succeeds to step 601 to step 610 of the afore-mentioned embodiment of virtual function performance analysis method 600, step 614 of the afore-mentioned embodiment of virtual function performance analysis method 700 and step 620 of the afore-mentioned embodiment of virtual function performance analysis method 800, therefore step 601 to step 620 are omitted in FIG. 9.

Refer to FIG. 9. In step 624 of the present method 900, based on the analysis result of the performance analysis unit 106 which indicates that the usage status of each virtual resource used by the virtual network function application 200 is not near an upper limit of the allocation of the virtual resource, and the usage status of each virtual resource used by the virtual network function application 200 is not almost overloaded. Furthermore, the total value of usage status of each physical resource is not near an upper limit of the allocation of the physical resource, and the total usage status of each physical resource is not almost overloaded (as listed in Table 4, the actual value of usage status of the virtual CPU 412 used by the virtual network function application 200 is 20%, which is lower than the expected value of 22% as listed in Table 2-1, furthermore, the actual total value of usage status of the physical CPU 402 is 60%, which is lower than the expected value of 62% as listed in Table 2-1). Therefore, it is determined that, other virtual network function applications 230 and 260 may not compete with the virtual network function application 200 for physical resources, and the virtual functions 202, 204 and 206 of the virtual network function application 200 may not compete for virtual resources. Therefore, the performance analysis unit 106 determines that, the reason for which the execution time of the virtual function 204 is much greater than the expected value (and hence virtual function 204 becomes a performance bottleneck) is irrelevant to the allocation of the physical resources and/or virtual resource.

Then, the method proceeds to step 628, the performance analysis unit 106 determines that performance bottleneck of the virtual function 204 is possibly caused by logic error of programming in the programming code of the virtual function 204 (such as error in the lock mechanism of the programming code of the virtual function 204) or caused by abnormalities in packet processing. A case for the abnormality in packet processing may be, for example, packet loss of the virtual function 204 will cause the re-transmission mechanism of the software protocol to re-transmit the packets, and the delay in service of the virtual function 204 will be too long.

According to the embodiments of different implementations disclosed above, the virtual function performance analysis system 100A (or 100B) of the present disclosure monitors several performance indicators (such as "execution time", "execution frequency", "queue length and "error rate") of each of the virtual functions 202, 204 and 206 of the virtual network function application 200 (that is, target virtual network function application) and analyzes several performance indicators (such as "value of usage status", "error event" and "resource saturation") of each physical resource and/or each virtual resource on the virtual platform 400. Moreover, actual value of each performance indicator of each physical resource and/or each virtual resource of each of the virtual functions 202, 204 and 206 of the virtual network function application 200 is monitored on the virtual platform 400 of an actual environment. Then, whether the actual value of each performance indicator is far greater than the expected value and/or threshold value is determined. If the actual value of each performance indicator is far greater than the associated expected value and/or threshold value, this indicates: the virtual function (such as virtual function 202) is overloaded; the physical resources and/or virtual resources allocated to the virtual network function application 200 (which has the virtual function that is overloaded ) are insufficient; other virtual network function applications 230 and 260 are competing with the virtual network function application 200 for physical resources; or the virtual functions 202, 204 and 206 of the virtual network function application 200 are completing for virtual resources. The virtual function performance analysis system 100A (or 100B) automatically defines the "virtual function", or the "physical resource" or "virtual resource" whose usage status is near the upper limit of the allocation of corresponding resources or almost overloaded as a bottleneck which deteriorates performance of the virtual network function application 200.

In comparison to the art in which the data of each performance indicator is manually collected by maintenance personnel on the virtual platform, the virtual function performance analysis system 100A (or 100B) of the present disclosure connects and analyzes the data of each performance indicator in an automatic manner and therefore has the advantage in terms of timeliness and speed. In the art, maintenance personnel on the virtual platform do not analyze the performance indicator "execution time" of the virtual function, and therefore may not accurately analyze the causes of abnormalities. Conversely, the virtual function performance analysis system 100A (or 100B) of the disclosure may accurately analyze the execution time of each virtual function. In comparison to the art which merely ascribes performance bottleneck to the virtual network function application, the virtual function performance analysis system 100A (or 100B) of the present disclosure may more accurately ascribe bottleneck to a particular function of the virtual network function application and accurately analyze which function deteriorates system performance on the virtual platform 400.

Besides, with respect to the factor that deteriorates system performance on the virtual platform, the virtual function performance analysis system 100A (or 100B) of the present disclosure may automatically adjust the virtual network function application 200 and/or service of each of the virtual functions 202, 204 and 206 or automatically expand the physical resources and/or virtual resources or adjust the allocation on the virtual platform 400 to improve system performance on the virtual platform 400 in an automatic manner.

While the invention has been described by way of example and in terms of the preferred embodiment (s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A virtual function performance analysis system for analyzing performance of at least one virtual function (202-206) of a virtual network function application (200) on a virtual platform (400), the virtual platform (400) has at least one physical resource (402-408) and at least one virtual resource (412-418), **characterized in that**, the system comprising:
a monitoring unit (104), configured to monitor performance of the at least one virtual function (202-206) on the virtual platform (400), and each of the physical resources (402-408), each of the virtual resources (412-418) and each of the virtual functions (202-206) is evaluated with at least one performance indicator respectively, each of the performance indicators is associated with an expected value and/or a threshold value respectively, and the monitoring unit (104) monitors and records an actual value of each of the performance indicators on the virtual platform (400); and
a performance analysis unit (106), configured to compare the actual value of each of the performance indicators with the associated expected value and/or threshold value to obtain a comparison result of each of the performance indicators and to analyze system performance according to the comparison result.

2. The virtual function performance analysis system according to claim 1, further comprising:
a testing unit (102), configured to monitor each of the virtual functions (202-206) of the virtual network function application (200) on a testing platform (300) and build the expected value and/or the threshold value associated with each of the performance indicators with which each of the virtual functions (202-206) is evaluated.

3. The virtual function performance analysis system according to claim 1, wherein the performance indicators with which each of the virtual functions (202-206) is evaluated comprise at least one of an execution time, an execution frequency, an error rate or a queue length of each of the virtual functions, or at least one of the respective execution time, execution frequency, error rate or queue length of each of the virtual functions (202-206) corresponding to each thread of multi-thread, and the performance indicator with which each of the physical resources (402-408) and/or each of the virtual resources (412-418) is evaluated comprises a value of an usage status respectively.

4. The virtual function performance analysis system according to claim 1, wherein if the comparison result indicates that the actual values of the performance indicators are higher than the associated expected value and/or threshold value, then the performance analysis unit (106) determines that the physical resources (402-408) and/or the virtual resources (412-418) or the virtual functions (202-206) evaluated with the performance indicators are performance bottleneck on the virtual platform (400), and using a resource adjusting unit (108) to perform at least one of the following operations according to the comparison result: adjusting service of the virtual network function application (200), adjusting an allocation of the physical resources (402-408), or adjusting an allocation of the virtual resources (412-418) of the virtual network function application (200).

5. The virtual function performance analysis system according to claim 4, wherein if the comparison result indicates that an usage status of at least one of each of the physical resources (402-408) and/or each of the virtual resources (412-418) is near an upper limit of the allocation of corresponding resources or almost overloaded, then using the resource adjusting unit (108) to perform at least one of the following operations according to the comparison result: expanding the allocation of the physical resources (402-408) which are possibly overloaded, or adjusting the allocation of the virtual resources (412-418) of the virtual network function application (200), to make the virtual network function application (200) and each of the virtual functions (202-206) have sufficient resource allocations.

6. The virtual function performance analysis system according to claim 4, wherein if the comparison result indicates that, an usage status of each of the physical resources (402-408) is not near an upper limit of the allocation of the physical resources (402-408) and is not almost overloaded, and an usage status of each of the virtual resources (412-418) is not near an upper limit of the allocation of the virtual resources (412-418) and is not almost overloaded, then the performance analysis unit (106) determines that the virtual functions (202-206) evaluated with the performance indicators have logic error in programming or abnormalities in packet processing.

7. The virtual function performance analysis system according to claim 1, wherein the physical resources (402-408) of the virtual platform (400) at least comprise at least one of a physical CPU (402), a physical memory (404), a physical network bandwidth (406) and a physical disc input/output (408), and the virtual resources (412-418) of the virtual platform (400) at least comprise at least one of a virtual CPU (412), a virtual memory (414), a virtual network bandwidth (416) and a virtual disc input/output (418).

8. A virtual function performance analysis method for analyzing performance of at least one virtual function (202-206) of a virtual network function application (200) on a virtual platform (400), the virtual platform (400) has at least one physical resource (402-408) and at least one virtual resource (412-418), **characterized in that**, the method comprising:
monitoring performance of the at least one virtual function (202-206) on the virtual platform (400), each of the physical resources (402-408), each of the virtual resources (412-418) and each of the virtual functions (202-206) is evaluated with at least one performance indicator respectively, each of the performance indicators is associated with an expected value and/or a threshold value;
monitoring and recording an actual value of each of the performance indicators on the virtual platform (400); and
comparing the actual value of each of the performance indicators with the associated expected value and/or threshold value to obtain a comparison result of each of the performance indicators and analyzing system performance according to the comparison result.

9. The virtual function performance analysis method according to claim 8, further comprising:
monitoring each of the virtual functions (202-206) of the virtual network function application (200) on a testing platform (300); and
building, on the testing platform (300), the expected value and/or the threshold value associated with each of the performance indicators with which each of the virtual functions (202-206) is evaluated.

10. The virtual function performance analysis method according to claim 8, wherein the performance indicators with which each of the virtual functions (202-206) is evaluated comprise at least one of an execution time, an execution frequency, an error rate or a queue length of each of the virtual functions (202-206), or at least one of the respective execution time, execution frequency, error rate or queue length of each of the virtual functions (202-206) corresponding to each thread of multi-thread, and the performance indicator with which each of the physical resources (402-408) and/or each of the virtual resources (412-418) is evaluated comprises a value of an usage status respectively.

11. The virtual function performance analysis method according to claim 8, wherein if the comparison result indicates that the actual values of the performance indicators are higher than the associated expected value and/or threshold value, then the virtual function performance analysis method further comprises:
determining that the physical resources (402-408) and/or the virtual resources (412-418) or the virtual functions (202-206) evaluated with the performance indicators are performance bottleneck on the virtual platform (400); and
according to the comparison result, adjusting service of the virtual network function application (200), adjusting an allocation of the physical resources (402-408), or adjusting an allocation of the virtual resources (412-418) of the virtual network function application (200).

12. The virtual function performance analysis method according to claim 11, wherein if the comparison result indicates that an usage status of at least one of each of the physical resources (402-408) and/or each of the virtual resources (412-418) is near an upper limit of the allocation of corresponding resources or almost overloaded, then the virtual function performance analysis method further comprises:
according to the comparison result, expanding the allocation of the physical resources (402-408) which are possibly overloaded, or adjusting the allocation of the virtual resources (412-418) of the virtual network function application (200), to make the virtual network function application (200) and each of the virtual functions (202-206) have sufficient resource allocations.

13. The virtual function performance analysis method according to claim 11, wherein if the comparison result indicates that, an usage status of each of the physical resources (402-408) is not near an upper limit of the allocation of the physical resources (402-408) and is not almost overloaded, and an usage status of each of the virtual resources (412-418) is not near an upper limit of the allocation of the virtual resources (412-418) and is not almost overloaded, then the virtual function performance analysis method further comprises:
determining that the virtual functions (202-206) evaluated with the performance indicators have logic error in programming or abnormalities in packet processing.

14. The virtual function performance analysis method according to claim 8, wherein the physical resources (402-408) of the virtual platform (400) at least comprise at least one of a physical CPU (402), a physical memory (404), a physical network bandwidth (406), and a physical disc input/output (408); and the virtual resources (412-418) of the virtual platform (400) at least comprise at least one of a virtual CPU (412), a virtual memory (414), a virtual network bandwidth (416), and a virtual disc input/output (418).

## Amended claims

### Amended claims in accordance with Rule 137(2) EPC.

1. A virtual function performance analysis system for analyzing performance of at least one virtual function (202-206) of a virtual network function application (200) on a virtual platform (400), the virtual platform (400) has at least one physical resource (402-408) and at least one virtual resource (412-418), **characterized in that**, the system comprising:
a monitoring unit (104), configured to monitor performance of the at least one virtual function (202-206) on the virtual platform (400), and each of the physical resources (402-408), each of the virtual resources (412-418) and each of the virtual functions (202-206) is evaluated with at least one performance indicator respectively, each of the performance indicators is associated with an expected value and/or a threshold value respectively, and the monitoring unit (104) monitors and records an actual value of each of the performance indicators on the virtual platform (400); and
a performance analysis unit (106), configured to compare the actual value of each of the performance indicators with the associated expected value and/or threshold value to obtain a comparison result of each of the performance indicators and to analyze system performance according to the comparison result, wherein the expected value and/or the threshold value are built in a testing platform.

2. The virtual function performance analysis system according to claim 1, further comprising:
a testing unit (102), configured to monitor each of the virtual functions (202-206) of the virtual network function application (200) on the testing platform (300) to build the expected value and/or the threshold value associated with each of the performance indicators with which each of the virtual functions (202-206) is evaluated.

3. The virtual function performance analysis system according to claim 1, wherein the performance indicators with which each of the virtual functions (202-206) is evaluated comprise at least one of an execution time, an execution frequency, an error rate or a queue length of each of the virtual functions, or at least one of the respective execution time, execution frequency, error rate or queue length of each of the virtual functions (202-206) corresponding to each thread of multi-thread, and the performance indicator with which each of the physical resources (402-408) and/or each of the virtual resources (412-418) is evaluated comprises a value of an usage status respectively.

4. The virtual function performance analysis system according to claim 1, wherein if the comparison result indicates that the actual values of the performance indicators are higher than the associated expected value and/or threshold value, then the performance analysis unit (106) determines that the physical resources (402-408) and/or the virtual resources (412-418) or the virtual functions (202-206) evaluated with the performance indicators are performance bottleneck on the virtual platform (400), and using a resource adjusting unit (108) to perform at least one of the following operations according to the comparison result: adjusting service of the virtual network function application (200), adjusting an allocation of the physical resources (402-408), or adjusting an allocation of the virtual resources (412-418) of the virtual network function application (200).

5. The virtual function performance analysis system according to claim 4, wherein if the comparison result indicates that an usage status of at least one of each of the physical resources (402-408) and/or each of the virtual resources (412-418) is near an upper limit of the allocation of corresponding resources or almost overloaded, then using the resource adjusting unit (108) to perform at least one of the following operations according to the comparison result: expanding the allocation of the physical resources (402-408) which are possibly overloaded, or adjusting the allocation of the virtual resources (412-418) of the virtual network function application (200), to make the virtual network function application (200) and each of the virtual functions (202-206) have sufficient resource allocations.

6. The virtual function performance analysis system according to claim 4, wherein if the comparison result indicates that, an usage status of each of the physical resources (402-408) is not near an upper limit of the allocation of the physical resources (402-408) and is not almost overloaded, and an usage status of each of the virtual resources (412-418) is not near an upper limit of the allocation of the virtual resources (412-418) and is not almost overloaded, then the performance analysis unit (106) determines that the virtual functions (202-206) evaluated with the performance indicators have logic error in programming or abnormalities in packet processing.

7. The virtual function performance analysis system according to claim 1, wherein the physical resources (402-408) of the virtual platform (400) at least comprise at least one of a physical CPU (402), a physical memory (404), a physical network bandwidth (406) and a physical disc input/output (408), and the virtual resources (412-418) of the virtual platform (400) at least comprise at least one of a virtual CPU (412), a virtual memory (414), a virtual network bandwidth (416) and a virtual disc input/output (418).

8. A virtual function performance analysis method for analyzing performance of at least one virtual function (202-206) of a virtual network function application (200) on a virtual platform (400), the virtual platform (400) has at least one physical resource (402-408) and at least one virtual resource (412-418), **characterized in that**, the method comprising:
monitoring performance of the at least one virtual function (202-206) on the virtual platform (400), each of the physical resources (402-408), each of the virtual resources (412-418) and each of the virtual functions (202-206) is evaluated with at least one performance indicator respectively, each of the performance indicators is associated with an expected value and/or a threshold value;
monitoring and recording an actual value of each of the performance indicators on the virtual platform (400); and
comparing the actual value of each of the performance indicators with the associated expected value and/or threshold value to obtain a comparison result of each of the performance indicators and analyzing system performance according to the comparison result, wherein the expected value and/or the threshold value are built in a testing platform.

9. The virtual function performance analysis method according to claim 8, further comprising:
monitoring each of the virtual functions (202-206) of the virtual network function application (200) on the testing platform (300); and
building, on the testing platform (300), the expected value and/or the threshold value associated with each of the performance indicators with which each of the virtual functions (202-206) is evaluated.

10. The virtual function performance analysis method according to claim 8, wherein the performance indicators with which each of the virtual functions (202-206) is evaluated comprise at least one of an execution time, an execution frequency, an error rate or a queue length of each of the virtual functions (202-206), or at least one of the respective execution time, execution frequency, error rate or queue length of each of the virtual functions (202-206) corresponding to each thread of multi-thread, and the performance indicator with which each of the physical resources (402-408) and/or each of the virtual resources (412-418) is evaluated comprises a value of an usage status respectively.

11. The virtual function performance analysis method according to claim 8, wherein if the comparison result indicates that the actual values of the performance indicators are higher than the associated expected value and/or threshold value, then the virtual function performance analysis method further comprises:
determining that the physical resources (402-408) and/or the virtual resources (412-418) or the virtual functions (202-206) evaluated with the performance indicators are performance bottleneck on the virtual platform (400); and
according to the comparison result, adjusting service of the virtual network function application (200), adjusting an allocation of the physical resources (402-408), or adjusting an allocation of the virtual resources (412-418) of the virtual network function application (200).

12. The virtual function performance analysis method according to claim 11, wherein if the comparison result indicates that an usage status of at least one of each of the physical resources (402-408) and/or each of the virtual resources (412-418) is near an upper limit of the allocation of corresponding resources or almost overloaded, then the virtual function performance analysis method further comprises:
according to the comparison result, expanding the allocation of the physical resources (402-408) which are possibly overloaded, or adjusting the allocation of the virtual resources (412-418) of the virtual network function application (200), to make the virtual network function application (200) and each of the virtual functions (202-206) have sufficient resource allocations.

13. The virtual function performance analysis method according to claim 11, wherein if the comparison result indicates that, an usage status of each of the physical resources (402-408) is not near an upper limit of the allocation of the physical resources (402-408) and is not almost overloaded, and an usage status of each of the virtual resources (412-418) is not near an upper limit of the allocation of the virtual resources (412-418) and is not almost overloaded, then the virtual function performance analysis method further comprises:
determining that the virtual functions (202-206) evaluated with the performance indicators have logic error in programming or abnormalities in packet processing.

14. The virtual function performance analysis method according to claim 8, wherein the physical resources (402-408) of the virtual platform (400) at least comprise at least one of a physical CPU (402), a physical memory (404), a physical network bandwidth (406), and a physical disc input/output (408); and the virtual resources (412-418) of the virtual platform (400) at least comprise at least one of a virtual CPU (412), a virtual memory (414), a virtual network bandwidth (416), and a virtual disc input/output (418).
